(19) Europäisches Patentamt
European Patent Office
Office européen des brevets

(11) **EP 3 595 158 A1**

(12) **DEMANDE DE BREVET EUROPEEN**

(43) Date de publication:
**15.01.2020 Bulletin 2020/03**

(51) Int Cl.:
**H02M 7/162** *(2006.01)*

(21) Numéro de dépôt: **19184800.1**

(22) Date de dépôt: **05.07.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **09.07.2018 FR 1856275**

(71) Demandeur: **Moteurs Leroy-Somer**
**16915 Angouleme (FR)**

(72) Inventeurs:
• **BOURLIER, Ludovic**
**16000 ANGOULEME (FR)**
• **KRAVTZOFF, Ivan**
**69003 LYON (FR)**
• **FOURNIER, Etienne**
**16000 ANGOULEME (FR)**
• **ALI, Houssene Ben**
**97620 CHIRONGUI (FR)**

(74) Mandataire: **Nony**
**11 rue Saint-Georges**
**75009 Paris (FR)**

(54) **REDRESSEUR COMMANDE**

(57) La présente invention concerne un procédé de commande d'un redresseur commandé (10), à relier d'une part à un réseau polyphasé (1), comportant une pluralité de lignes ($i$) d'alimentation, et d'autre part à un bus continu (2, 3), le redresseur (10) comportant pour chaque phase au moins un élément de redresseur ($g_j$) commandé avec un angle de commande ($\alpha_j$), le procédé comportant les étapes suivantes :

- calculer, pour au moins une ligne d'alimentation ($i$) du réseau polyphasé (1), un paramètre d'erreur ($\delta_i$) représentatif d'une sur/sous-intensité dans cette ligne et/ou du déséquilibre entre les lignes, et modifier l'angle de commande ($\alpha_j$) dudit au moins un élément de redresseur ($g_j$) en fonction au moins de ce paramètre d'erreur ($\delta_i$), afin de tendre vers un équilibre des courants parcourant le redresseur (10).

Fig. 3

## Description

La présente invention concerne les redresseurs commandés à relier d'une part à un réseau polyphasé, notamment triphasé, et d'autre part à un bus continu.

De tels redresseurs peuvent être utilisés par exemple dans les variateurs de vitesse où le bus continu alimente un onduleur relié à un moteur d'un système de traction, de levage ou de convoyage, notamment.

En entrée d'un variateur de vitesse, la conversion d'énergie du réseau alternatif vers le bus continu se fait généralement par un pont complet à diodes ne permettant aucun degré de liberté sur le contrôle du transfert d'énergie ou par un pont mixte thyristor-diode permettant de maîtriser les phases d'augmentation de la tension de bus continu mais ne permettant pas de contrôle en fonctionnement nominal. Dans les variateurs de vitesse connus, la capacité du bus continu est souvent élevée, ce qui conduit à des systèmes encombrants et coûteux.

Les brevets US 4 447 868 et US 4 272 807 décrivent des redresseurs réversibles comportant des cellules de redresseur comprenant une diode et un transistor montés en antiparallèle. Dans ces brevets, les commandes des transistors s'effectuent à partir de plusieurs mesures de tension des phases du réseau, ce qui rend les redresseurs relativement complexes et exposés aux perturbations du réseau.

Le brevet FR 2 881 294 divulgue un redresseur réversible en courant comportant une pluralité de cellules de redresseur, agencées de telle sorte que les performances du redresseur en termes de compatibilité électromagnétique sont améliorées, sans qu'il soit nécessaire de prévoir un filtre de compatibilité électromagnétique coûteux.

Dans les redresseurs connus, tous les éléments de redresseur sont commandés par des angles de commande identiques, l'un ne pouvant être modifié indépendamment des autres.

Ces redresseurs ne permettent ainsi pas le contrôle des grandeurs physiques en entrée ou en sortie et sont donc dépendants de leur environnement. Si la tension d'entrée est trop importante, ces redresseurs laissent passer la totalité de cette tension même s'il n'y a pas de besoin au niveau de l'utilisation. Si le réseau présente des perturbations, les solutions connues ne permettent pas de s'en affranchir. Ceci est préjudiciable en particulier lors du fonctionnement en charge.

Un fort déséquilibre de tension entraine un déséquilibre de courant sur les différentes phases du réseau polyphasé, qui peut augmenter vite et atteindre des valeurs importantes sur les installations récentes de forte puissance.

L'invention vise à remédier aux inconvénients des redresseurs connus et à proposer une méthode de commande d'un redresseur offrant une robustesse aux déséquilibres en tension, notamment lorsque le redresseur alimente un variateur de vitesse.

L'invention a ainsi pour objet un procédé de commande d'un redresseur commandé, à relier d'une part à un réseau polyphasé, comportant une pluralité de lignes d'alimentation, et d'autre part à un bus continu, le redresseur comportant pour chaque phase au moins un élément de redresseur $g_j$ commandé avec un angle de commande $\alpha_j$ le procédé comportant les étapes suivantes :

- calculer, pour au moins une ligne d'alimentation $i$ du réseau polyphasé, un paramètre d'erreur $\delta_i$ représentatif d'une sur/sous-intensité dans cette ligne et/ou du déséquilibre entre les lignes, et
- modifier l'angle de commande $\alpha_j$ dudit au moins un élément de redresseur $g_j$ en fonction au moins de ce paramètre d'erreur $\delta_i$, afin de tendre vers un équilibre des courants parcourant le redresseur.

Grâce à l'invention, le contrôle des courants parcourant le redresseur est possible, et les effets des déséquilibres éventuels en courant sur la température des câbles du réseau et leur impédance sont réduits.

L'invention permet d'agir sur la commande des angles des éléments de redresseur de façon fine et précise, ce qui apporte des degrés de liberté additionnels dans le contrôle de la tension de bus continu par le biais de l'équilibre des courants parcourant le redresseur.

Le contrôle précis de la tension de bus continu permet, en particulier, une remise sous tension progressive après un temps important sans mise sous tension, une réduction des pertes en commutation sur les composants de puissance, et une phase de préchauffage des bobinages des moteurs plus sûre, à tension réduite.

De surcroît, l'invention permet de réaliser un redresseur relativement fiable et moins sensible aux perturbations du réseau.

Par « *angle de commande d'un élément de redresseur* », il faut comprendre l'angle de retard à l'amorçage, ou à l'ouverture, de l'élément de redresseur, correspondant au retard entre le moment où la tension commandant l'état de l'élément de redresseur devient positive, et permet l'amorçage de l'élément, et le début de l'impulsion de l'élément de redresseur.

Les éléments de redresseur peuvent être des thyristors ou des transistors bipolaires, bipolaires à grille isolée (IGBT en anglais), MOSFET (« Metal Oxide Semiconductor Field Effect Transistor » en anglais), transistors SiC (« Silicon Carbide » en anglais) ou transistors au Nitrure de Gallium (GaN).

Dans le cas où les éléments de redresseur sont des thyristors, l'angle de commande correspond au retard entre le moment où la tension entre l'anode et la cathode du thyristor devient positive et le début de l'impulsion de la gâchette du thyristor. Dans le cas où les éléments de redresseur sont des IGBT, l'angle de commande correspond à la différence de tension ente la tension de la ligne et la tension moyenne du bus continu, ramenée à la fréquence de commutation utilisée.

Les paramètres d'erreur $\delta_i$ sont des grandeurs

sans dimension, représentatives d'une surintensité ou d'une sous-intensité dans la ligne d'alimentation *i* correspondante du réseau polyphasé. De préférence, pour une ligne d'alimentation *i* du réseau polyphasé, le paramètre d'erreur $\delta_i$ est calculé en fonction du courant $i_i$ parcourant ladite ligne *i* et de la moyenne arithmétique $i_{moy}$ des courants parcourant les lignes d'alimentation du réseau polyphasé.

Le bus continu alimente avantageusement un onduleur à relier électriquement à une charge. Dans ce cas, les paramètres d'erreur $\delta_i$ peuvent être calculés en fonction du courant nominal $i_N$ imposé par ladite charge.

Le paramètre d'erreur $\delta_i$ pour une ligne d'alimentation *i* du réseau polyphasé correspond de préférence à la différence entre le courant $i_i$ parcourant ladite ligne *i* et la moyenne arithmétique $i_{moy}$ des courants parcourant chaque ligne d'alimentation du réseau polyphasé, divisée par le courant nominal $i_N$.

De préférence, les valeurs efficaces RMS des courants $i_i$ sont utilisées. Le paramètre d'erreur $\delta_i$ peut alors être calculé par l'expression suivante :

$$\delta_i = \frac{i_{i,RMS} - i_{RMS,moy}}{i_N}.$$

L'angle de commande $\alpha_j$ de l'élément de redresseur correspondant $g_j$ peut être modifié en fonction d'une valeur correspondant à une différence entre les paramètres d'erreur $\delta_i$ de chaque ligne d'alimentation *i* du réseau polyphasé.

L'angle de commande $\alpha_j$ est avantageusement modifié de telle sorte que, à chaque instant t, la somme des courants $i_i(t)$ provenant de chaque ligne d'alimentation *i* du réseau polyphasé soit nulle.

L'angle de commande $\alpha_j$ peut être modifié par une correction de type proportionnel-intégral (PI), proportionnel-dérivée (PD) ou proportionnel-intégral-dérivée (PID).

Le redresseur comporte avantageusement une pluralité d'éléments de redresseur $g_j$, chacun commandés avec un angle de commande $\alpha_j$. Dans ce cas, tous les angles de commande $\alpha_j$ des éléments de redresseur $g_j$ peuvent être modifiés à la fois, en fonction au moins des paramètres d'erreur $\delta_i$. Dans une variante, seuls certains angles de commande $\alpha_j$ des éléments de redresseur $g_j$ sont modifiés. Le procédé de commande selon l'invention permet ainsi d'agir indépendamment sur l'un ou l'autre des éléments de redresseur, offrant une régulation fine et précise.

Dans le cas où les éléments de redresseur sont des thyristors, on peut modifier l'angle de commande $\alpha_j$ d'une gâchette $g_j$ d'au moins un élément de redresseur.

Dans le cas où le bus continu alimente un onduleur à relier électriquement à une charge, l'onduleur peut transmettre au redresseur un signal indiquant une variation de besoin de la charge, l'angle de commande $\alpha_j$ de l'élément de redresseur correspondant $g_j$ étant modifié suite à la réception de ce signal, afin de réguler la tension du bus continu $U_{dc}$ et/ou la tension de sortie de l'onduleur autour d'une valeur de consigne.

L'invention permet ainsi de contrôler les déséquilibres en courant en agissant sur la tension de bus continu lorsque la demande de la charge n'est pas maximale, ou, au contraire, lorsqu'elle augmente brusquement.

L'onduleur peut également transmettre au redresseur un signal indiquant une variation de la tension de sortie de l'onduleur, l'angle de commande $\alpha_j$ de l'élément de redresseur correspondant $g_j$ étant modifié suite à la réception de ce signal, afin de réguler la tension de sortie de l'onduleur autour d'une valeur de consigne. L'invention permet ainsi de contrôler les déséquilibres en courant selon les variations de la tension de sortie de l'onduleur.

L'invention a encore pour objet, selon un autre de ses aspects, un système de commande d'un redresseur commandé, à relier d'une part à un réseau polyphasé, comportant une pluralité de lignes d'alimentation, et d'autre part à un bus continu, le redresseur comportant pour chaque phase au moins un élément de redresseur commandé avec un angle de commande $\alpha_j$, le système de commande étant configuré pour :

- calculer, pour au moins une ligne d'alimentation i du réseau polyphasé, un paramètre d'erreur $\delta_i$ représentatif d'une sur/sous-intensité dans cette ligne et/ou du déséquilibre entre les lignes, et
- modifier l'angle de commande $\alpha_j$ dudit au moins un élément de redresseur $g_j$ en fonction au moins de ce paramètre d'erreur $\delta_i$, afin de tendre vers un équilibre des courants parcourant le redresseur.

Le redresseur peut comporter un contrôleur apte à calculer les paramètres d'erreur $\delta_i$ et à modifier l'angle de commande $\alpha_j$ de l'élément de redresseur correspondant $g_j$.

Le contrôleur du redresseur peut implémenter une boucle de correction et des correcteurs PI, PID ou PD, aptes à modifier les angles de commande $\alpha_j$ des éléments de redresseur $g_j$.

Dans le cas où le bus continu alimente un onduleur à relier électriquement à une charge, et où l'onduleur comporte un contrôleur apte à échanger des informations avec le contrôleur du redresseur, le contrôleur de l'onduleur est avantageusement apte à transmettre au contrôleur du redresseur un signal indiquant une variation de besoin de la charge, l'angle de commande $\alpha_j$ de l'élément de redresseur correspondant $g_j$ étant modifié suite à la réception de ce signal par le contrôleur du redresseur, afin de réguler la tension de bus continu $U_{dc}$ et/ou la tension de sortie de l'onduleur autour d'une valeur de consigne.

Le contrôleur du redresseur peut envoyer au contrôleur de l'onduleur les limites de tension, de fréquence ou d'angle de commande, de manière à ce que le contrôleur de l'onduleur puisse anticiper et/ou ajuster le point de fonctionnement en fonction des demandes de charge ou des fluctuations éventuelles de la ligne.

Le contrôleur de l'onduleur peut également être apte à transmettre au contrôleur du redresseur un signal indiquant une variation de la tension de sortie de l'onduleur, l'angle de commande $\alpha_j$ de l'élément de redresseur correspondant $g_j$ étant modifié suite à la réception de ce signal, afin de réguler la tension de sortie de l'onduleur autour d'une valeur de consigne.

L'invention offre ainsi une solution de contrôle intelligente et communicante avec l'onduleur et la charge, pour agir pendant les phases disponibles de l'utilisation et en fonction de l'environnement. Le procédé de contrôle du redresseur permet de contrôler les courants d'entrée et/ou le bus continu en fonction de la charge pour minimiser les pertes dans les conducteurs et les parties actives.

Le redresseur peut être choisi parmi les redresseurs à pont de thyristors, à pont mixte thyristor-diode, ou à pont de transistors, notamment transistors bipolaires, bipolaires à grille isolée, au GaN ou SiC.

Le réseau polyphasé est de préférence triphasé.

L'invention a encore pour objet, selon un autre de ses aspects, un système de contrôle de la vitesse d'un moteur électrique comportant un redresseur commandé selon le procédé de commande tel que défini ci-dessus.

Grâce au contrôle de la tension de bus continu selon l'invention, les pertes de commutation dans les composants de puissance d'un tel système de contrôle de la vitesse d'un moteur électrique sont réduites. En outre, l'utilisation du redresseur commandé selon l'invention dans un variateur de vitesse permet de réduire la capacité de bus continu comparativement à certains systèmes connus. Le système devient alors moins encombrant, plus fiable et moins coûteux.

Les caractéristiques énoncées ci-dessus pour le procédé s'appliquent au système de commande d'un redresseur commandé et au système de contrôle de la vitesse d'un moteur électrique, et vice-versa.

L'invention pourra être mieux comprise à la lecture de la description détaillée qui va suivre, d'exemples de mise en oeuvre non limitatifs de l'invention, et à l'examen du dessin annexé, sur lequel:

- la figure 1 représente un premier exemple de mise en oeuvre de l'invention,
- la figure 2 est une vue analogue à la figure 1 d'un deuxième exemple de mise en oeuvre de l'invention,
- la figure 3 représente des étapes du procédé de commande selon l'invention,
- la figure 4 représente une courbe de commande d'angles d'éléments de redresseur commandés selon l'invention, et
- la figure 5 représente de manière schématique un système de contrôle de la vitesse d'un moteur électrique incorporant un redresseur commandé conformément à l'invention.

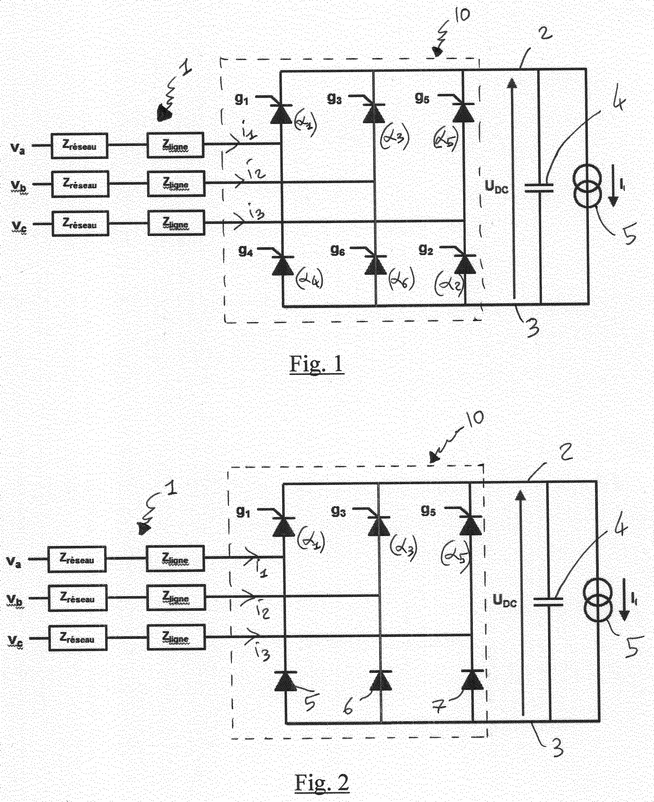

On a représenté à la figure 1 un exemple de mise en oeuvre d'un redresseur 10 à pont de thyristors commandé conformément à l'invention, comportant des éléments de redresseurs $g_1$, $g_3$, $g_5$ respectivement reliés d'une part à chacune des phases a, b, c d'un réseau triphasé 1, et d'autre part à la ligne de polarité positive 2 d'un bus continu, et des éléments de redresseurs $g_4$, $g_6$, $g_2$ respectivement reliés d'une part aux phases a, b, c, et d'autre part à la ligne de polarité négative 3 du bus continu. Ce dernier alimente un filtre capacitif 4 branché en parallèle avec une source de courant 5.

Dans la variante de la figure 2, le redresseur 10 est à pont mixte thyristor-diode, comportant trois diodes 5, 6, 7, respectivement reliées d'une part aux phases a, b, c du réseau triphasé 1, et d'autre part à la ligne de polarité négative 3 du bus continu, et trois éléments de redresseurs $g_1$, $g_3$, $g_5$ respectivement reliés d'une part à chacune des phases a, b, c, et d'autre part à la ligne de polarité positive 2 du bus continu.

Le réseau triphasé 1 comporte trois lignes d'alimentation $i = 1, 2, 3$, comportant chacune des impédances réseau et ligne, et parcourue chacune par un courant $i_i$.

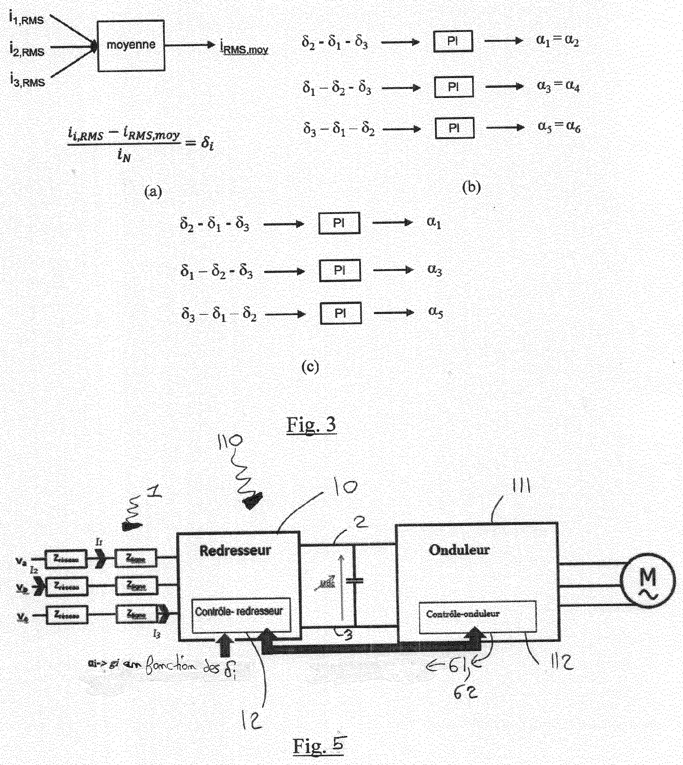

Chaque élément de redresseur $g_j$, ici la gâchette des thyristors, est commandé avec un angle de commande $\alpha_j$. De préférence et comme décrit précédemment, dans le procédé de commande selon l'invention, dans le cas où le bus continu alimente un onduleur à relier électriquement à une charge, pour chaque ligne d'alimentation $i$ du réseau polyphasé, des paramètres d'erreur $\delta_i$, représentatifs d'une sur/sous-intensité dans la ligne correspondante et/ou du déséquilibre entre les lignes, sont calculés par la différence entre la valeur efficace du courant $i_{i,RMS}$ parcourant ladite ligne $i$ et la moyenne arithmétique $i_{RMS,\,moy}$ des valeurs efficaces des courants parcourant les lignes d'alimentation du réseau polyphasé 1, divisée par le courant nominal $i_N$ imposé par ladite charge. Comme représenté à la figure 3(a), le paramètre d'erreur $\delta_i$ est ainsi calculé par l'expression suivante : $\delta_i = \dfrac{i_{i,RMS} - i_{RMS,moy}}{i_N}$.

L'angle de commande $\alpha_j$ d'au moins un élément de redresseur $g_j$ est modifié en fonction au moins de ces paramètres d'erreur $\delta_i$, afin de tendre vers un équilibre des courants parcourant le redresseur, de manière, notamment, à réguler la tension du bus continu $U_{dc}$.

De préférence et comme représenté à la figure 3(b) pour la variante pont à thyristors, et à la figure 3(c) pour la variante pont mixte, l'angle de commande $\alpha_j$ d'au moins un élément de redresseur $g_j$ est modifié en fonction d'une valeur correspondant à une différence entre les paramètres d'erreur $\delta_i$ de chaque ligne d'alimentation i du réseau polyphasé, par une correction de type proportionnel-intégral. Par exemple, en relation avec le mode de réalisation de la figure 2, les angles $\alpha_1$ et $\alpha_2$ sont modifiés en fonction de la différence $\delta_2 - \delta_1 - \delta_3$.

Comme décrit précédemment, tous les angles de commande $\alpha_j$ des éléments de redresseur $g_j$ peuvent être modifiés à la fois, en fonction au moins des paramètres d'erreur $\delta_i$, ou seuls certains angles de commande $\alpha_j$ des éléments de redresseur $g_j$ peuvent être modifiés, par exemple seulement un ou deux angles dans le cas où le redresseur comporte trois éléments de redresseur.

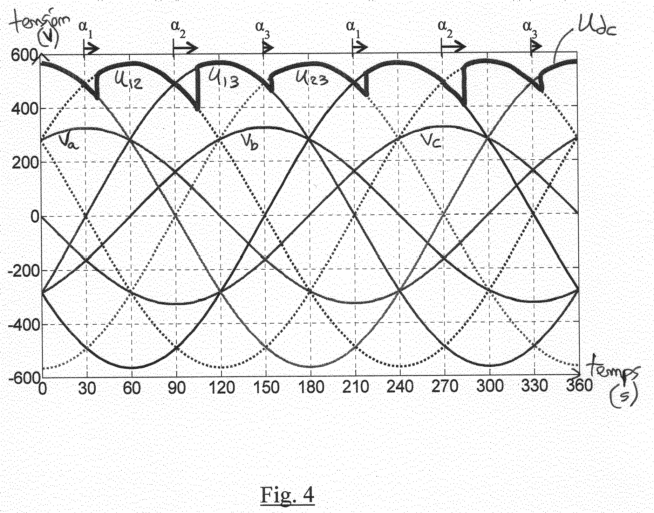

La figure 4 représente une courbe de commande d'angles $\alpha_j$ d'éléments de redresseur commandés selon l'invention, en relation avec la figure 1, au cours du temps, en fonction des tensions issues du réseau, $V_a$, $V_b$, $V_c$ mesurées par ligne, et $U_{12}$, $U_{13}$, $U_{23}$ ... mesurées d'une ligne à l'autre. On peut voir sur cette figure que la commande successive des angles $\alpha_j$, en fonction du moment et de la régulation nécessaire, permet de réguler la tension de bus continu $U_{dc}$ résultante (courbe supérieure en trait épais).

Un redresseur 10 commandé conformément à l'invention peut trouver de nombreuses applications.

Le redresseur 10 peut par exemple être incorporé dans un système de contrôle 110 de la vitesse d'un moteur électrique M, tel qu'illustré à la figure 5.

Le système de contrôle 110 représenté sur cette figure comporte, outre le redresseur commandé 10 selon l'invention, un hacheur réversible ou pont onduleur 111 permettant, dans cet exemple, de commander un moteur M à une vitesse variable, voire de récupérer de l'énergie de tout système réversible ou générateur, par exemple des panneaux solaires, des éoliennes ou des systèmes comportant une phase de restitution d'énergie.

De préférence et comme représenté à la figure 5, le redresseur 10 comporte un contrôleur 12 apte à calculer les paramètres d'erreur $\delta_i$ et à modifier l'angle de commande $\alpha_j$ des éléments de redresseur $g_j$.

Le contrôleur 12 du redresseur 10 comporte, dans cet exemple, des correcteurs PI aptes à modifier les angles de commande $\alpha_j$ des éléments de redresseur $g_j$.

Dans l'exemple considéré, comme visible à la figure 5, l'onduleur 111 comporte un contrôleur 112 apte à échanger des informations avec le contrôleur 12 du redresseur 10. Le contrôleur 112 de l'onduleur 111 est notamment apte à transmettre au contrôleur 12 du redresseur 10 un signal 61 indiquant une variation de besoin de la charge M. L'angle de commande $\alpha_j$ d'au moins un élément de redresseur $g_j$ est ainsi avantageusement modifié suite à la réception de ce signal 61 par le contrôleur 12 du redresseur 10, afin de réguler la tension de bus continu $U_{dc}$ et/ou la tension de sortie de l'onduleur autour d'une valeur de consigne.

Le contrôleur 12 du redresseur 10 peut envoyer au contrôleur 112 de l'onduleur 111 les limites de tension, de fréquence ou d'angle de commande.

Le contrôleur 112 de l'onduleur 111 peut également transmettre au contrôleur 12 du redresseur 10 un signal 62 indiquant une variation de la tension de sortie de l'onduleur. L'angle de commande $\alpha_j$ d'au moins un élément de redresseur $g_j$ peut être modifié suite à la réception de ce signal 62 par le contrôleur 12 du redresseur 10, afin de réguler la tension de sortie de l'onduleur autour d'une valeur de consigne.

Bien entendu, l'invention n'est pas limitée aux exemples qui viennent d'être décrits.

En particulier, le procédé de commande selon l'invention peut encore être appliqué à d'autres types de redresseurs.

Dans toute la description, y compris les revendications, l'expression « *comportant un* » doit être comprise comme étant synonyme de « *comprenant au moins un* », sauf si le contraire est spécifié.

**Revendications**

1. Procédé de commande d'un redresseur commandé (10), à relier d'une part à un réseau polyphasé (1), comportant une pluralité de lignes (*i*) d'alimentation, et d'autre part à un bus continu (2, 3), le redresseur (10) comportant pour chaque phase au moins un élément de redresseur ($g_j$) commandé avec un angle de commande ($\alpha_j$), le procédé comportant les étapes suivantes :

   - calculer, pour au moins une ligne d'alimentation (*i*) du réseau polyphasé (1), un paramètre d'erreur ($\delta_i$) représentatif d'une sur/sous-intensité dans cette ligne et/ou du déséquilibre entre les lignes, et
   - modifier l'angle de commande ($\alpha_j$) dudit au moins un élément de redresseur ($g_j$) en fonction au moins de ce paramètre d'erreur ($\delta_i$), afin de tendre vers un équilibre des courants parcourant le redresseur (10).

2. Procédé selon la revendication 1, dans lequel, pour une ligne d'alimentation (*i*) du réseau polyphasé (1), le paramètre d'erreur ($\delta_i$) est calculé en fonction du courant ($i_i$) parcourant ladite ligne (*i*) et de la moyenne arithmétique ($i_{moy}$) des courants parcourant les lignes d'alimentation du réseau polyphasé.

3. Procédé selon la revendication 1 ou 2, dans lequel, le bus continu (2, 3) alimentant un onduleur (111) à relier électriquement à une charge (M), le paramètre d'erreur ($\delta_i$) est en outre calculé en fonction du courant nominal ($i_N$) imposé par ladite charge.

4. Procédé selon la revendication 3, dans lequel le paramètre d'erreur ($\delta_i$) pour une ligne d'alimentation (*i*) du réseau polyphasé (1) correspond à la différence entre le courant ($i_i$) parcourant ladite ligne (*i*) et la moyenne arithmétique ($i_{moy}$) des courants parcourant chaque ligne d'alimentation du réseau polyphasé, divisée par le courant nominal ($i_N$).

**5.** Procédé selon l'une quelconque des revendications 1 à 4, dans lequel l'angle de commande ($\alpha_j$) de l'élément de redresseur correspondant ($g_j$) est modifié en fonction d'une valeur correspondant à une différence entre les paramètres d'erreur ($\delta_i$) de chaque ligne d'alimentation ($i$) du réseau polyphasé (1).

**6.** Procédé selon l'une quelconque des revendications précédentes, dans lequel l'angle de commande ($\alpha_j$) est modifié de telle sorte que, à chaque instant (t), la somme des courants ($i_i(t)$) provenant de chaque ligne d'alimentation ($i$) du réseau polyphasé (1) soit nulle.

**7.** Procédé selon l'une quelconque des revendications précédentes, dans lequel l'angle de commande ($\alpha_j$) est modifié par une correction de type proportionnel-intégral.

**8.** Procédé selon l'une quelconque des revendications précédentes, dans lequel, le redresseur (10) comportant une pluralité d'éléments de redresseur ($g_j$), chacun commandés avec un angle de commande ($\alpha_j$), tous les angles de commande ($\alpha_j$) des éléments de redresseur ($g_j$) sont modifiés à la fois, en fonction au moins des paramètres d'erreur ($\delta_i$).

**9.** Procédé selon l'une quelconque des revendications précédentes, dans lequel, le bus continu (2, 3) alimentant un onduleur (111) à relier électriquement à une charge (M), l'onduleur transmet au redresseur un signal (61) indiquant une variation de besoin de la charge, l'angle de commande ($\alpha_j$) de l'élément de redresseur correspondant ($g_j$) étant modifié suite à la réception de ce signal (61), afin de réguler la tension du bus continu ($U_{dc}$) et/ou la tension de sortie de l'onduleur (111) autour d'une valeur de consigne.

**10.** Procédé selon l'une quelconque des revendications précédentes, dans lequel, les éléments de redresseur étant des thyristors, on modifie l'angle de commande ($\alpha_j$) d'une gâchette ($g_j$) d'au moins un élément de redresseur.

**11.** Système de commande d'un redresseur commandé (10), à relier d'une part à un réseau polyphasé (1), comportant une pluralité de lignes ($i$) d'alimentation, et d'autre part à un bus continu (2, 3), le redresseur (10) comportant pour chaque phase au moins un élément de redresseur ($g_j$) commandé avec un angle de commande ($\alpha_j$), le système de commande étant configuré pour :

  - calculer, pour au moins une ligne d'alimentation ($i$) du réseau polyphasé (1), un paramètre d'erreur ($\delta_i$) représentatif d'une sur/sous-intensité dans cette ligne et/ou du déséquilibre entre les lignes, et
  - modifier l'angle de commande ($\alpha_j$) dudit au moins un élément de redresseur ($g_j$) en fonction au moins de ce paramètre d'erreur ($\delta_i$), afin de tendre vers un équilibre des courants parcourant le redresseur (10).

**12.** Système selon la revendication précédente, dans lequel le redresseur (10) comporte un contrôleur (12) apte à calculer les paramètres d'erreur ($\delta_i$) et à modifier l'angle de commande ($\alpha_j$) de l'élément de redresseur correspondant ($g_j$).

**13.** Système selon la revendication précédente, dans lequel, le bus continu (2, 3) alimentant un onduleur (111) à relier électriquement à une charge (M), et l'onduleur comportant un contrôleur (112) apte à échanger des informations avec le contrôleur (12) du redresseur (10), le contrôleur (112) de l'onduleur (111) est apte à transmettre au contrôleur (12) du redresseur (10) un signal (61) indiquant une variation de besoin de la charge (M), l'angle de commande ($\alpha_j$) de l'élément de redresseur correspondant ($g_j$) étant modifié suite à la réception de ce signal (61) par le contrôleur (12) du redresseur (10), afin de réguler la tension de bus continu ($U_{dc}$) et/ou la tension de sortie de l'onduleur (111) autour d'une valeur de consigne.

**14.** Système selon l'une quelconque des revendications 11 à 13, dans lequel le redresseur (10) est choisi parmi les redresseurs à pont de thyristors, à pont mixte thyristor-diode, ou à pont de transistors, notamment des transistors bipolaires, bipolaires à grille isolée, MOSFET, SiC ou au GaN.

**15.** Système de contrôle de la vitesse d'un moteur électrique (M) comportant un redresseur (10) commandé selon le procédé de commande tel que défini dans l'une quelconque des revendications 1 à 10.

Fig. 1

Fig. 2

$i_{1,RMS}$

$i_{2,RMS}$ → moyenne → $i_{RMS,moy}$

$i_{3,RMS}$

$$\frac{i_{i,RMS} - i_{RMS,moy}}{i_N} = \delta_i$$

(a)

$\delta_2 - \delta_1 - \delta_3$ → PI → $\alpha_1 = \alpha_2$

$\delta_1 - \delta_2 - \delta_3$ → PI → $\alpha_3 = \alpha_4$

$\delta_3 - \delta_1 - \delta_2$ → PI → $\alpha_5 = \alpha_6$

(b)

$\delta_2 - \delta_1 - \delta_3$ → PI → $\alpha_1$

$\delta_1 - \delta_2 - \delta_3$ → PI → $\alpha_3$

$\delta_3 - \delta_1 - \delta_2$ → PI → $\alpha_5$

(c)

Fig. 3

Fig. 5

Fig. 4

Europäisches
Patentamt

European
Patent Office

Office européen
des brevets

**RAPPORT DE RECHERCHE EUROPEENNE**

Numéro de la demande

EP 19 18 4800

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2016/069791 A1 (MURATA MANUFACTURING CO [JP]; MURATA POWER SOLUTIONS [US]) 6 mai 2016 (2016-05-06) * colonnes 12,13,56; figure 2 * ----- | 1-12 | INV. H02M7/162 |
| X | WEILAND M ET AL: "Investigation of line-commutated three-phase converters with impedance unbalance", ELECTRIC POWER QUALITY AND SUPPLY RELIABILITY CONFERENCE (PQ), 2010, IEEE, PISCATAWAY, NJ, USA, 16 juin 2010 (2010-06-16), pages 137-142, XP031733837, ISBN: 978-1-4244-6978-9 * alinéas [0004], [0008]; figure 1 * ----- | 1-11,14, 15 | |
| X | MANUEL WEILAND ET AL: "Investigation of line-commutated three-phase converters under voltage unbalance", RENEWABLE ENERGY AND POWER QUALITY JOURNAL, vol. 1, 23 mars 2010 (2010-03-23), pages 382-387, XP055590431, DOI: 10.24084/repqj08.336 * alinéa [0004]; figure 1 * ----- | 1-11,14, 15 | |
| A | ELOI NGANDUI ET AL: "DC Harmonic Distortion Minimization of Thyristor Converters Under Unbalanced Voltage Supply Using Asymmetrical Firing Angle", IEEE TRANSACTIONS ON POWER ELECTRONICS, INSTITUTE OF ELECTRICAL AND ELECTRONICS ENGINEERS, USA, vol. 12, no. 2, 1 mars 1997 (1997-03-01), XP011043044, ISSN: 0885-8993 * le document en entier * ----- -/-- | 1,12 | |

**DOMAINES TECHNIQUES RECHERCHES (IPC)**

H02M

Le présent rapport a été établi pour toutes les revendications

| Lieu de la recherche | Date d'achèvement de la recherche | Examinateur |
|---|---|---|
| La Haye | 18 novembre 2019 | Taccoen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 18 4800

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 579 035 A1 (ACCUMULATEURS FIXES [FR]) 19 septembre 1986 (1986-09-19) * le document en entier * ----- | 1,12 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 18 novembre 2019 | Taccoen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 2 de 2

**EP 3 595 158 A1**

## ANNEXE AU RAPPORT DE RECHERCHE EUROPEENNE
## RELATIF A LA DEMANDE DE BREVET EUROPEEN NO.

EP 19 18 4800

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-11-2019

| Document brevet cité au rapport de recherche | Date de publication | Membre(s) de la famille de brevet(s) | Date de publication |
|---|---|---|---|
| WO 2016069791 A1 | 06-05-2016 | CN 107078626 A<br>US 2017279370 A1<br>WO 2016069791 A1 | 18-08-2017<br>28-09-2017<br>06-05-2016 |
| FR 2579035 A1 | 19-09-1986 | AUCUN | |

EPO FORM P0460

Pour tout renseignement concernant cette annexe : voir Journal Officiel de l'Office européen des brevets, No.12/82

12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4447868 A
- US 4272807 A

- FR 2881294